# EUROPÄISCHE PATENTSCHRIFT

(11) **EP 3 794 264 B1**
(45) Veröffentlichungstag und Bekanntmachung des Hinweises auf die Patenterteilung: **07.06.2023**
(21) Anmeldenummer: 19723055.0
(22) Anmeldetag: 06.05.2019
(51) Int. Cl.: F16L 21/08, F16L 19/08, F16L 37/092, B29C 45/14, B29C 45/00

(54) **KLEMMRING**
CLAMPING RING
BAGUE DE SERRAGE

(30) Priorität: 16.05.2018 AT 504092018
(43) Veröffentlichungstag der Anmeldung: 24.03.2021
(73) Patentinhaber: E. Hawle Armaturenwerke GmbH, 4840 Vöcklabruck (AT)
(72) Erfinder: PLASS, Manuela, 4060 Leonding (AT)
(74) Vertreter: Puchberger & Partner Patentanwälte
(86) Internationale Anmeldenummer: PCT/EP2019/061507
(87) Internationale Veröffentlichungsnummer: WO 2019/219424

(56) Entgegenhaltungen:
- EP-A1- 3 112 736
- EP-A2- 1 600 682
- GB-A- 2 292 780
- US-A- 4 706 529

## Beschreibung

Die Erfindung betrifft ein Verfahren und einen durch dieses Verfahren hergestellten Klemmring.

Aus dem Stand der Technik sind unterschiedliche Klemmringe, welche insbesondere als Zugsicherung für Rohre eingesetzt werden, und deren Herstellungsverfahren bekannt. Beispielsweise werden für die Sicherung von Polyethylen- bzw. PE- Rohren Klemmringe verwendet, welche aus Polyoxymethylen bzw. POM hergestellt sind. Ferner sind beispielsweise aus der Druckschrift EP 1 600 682 A2 Spannzangen zur Verwendung in Rohrkupplungen und zum Verriegeln eines Rohrs in einem Kupplungskörper sowie deren Herstellungsverfahren bekannt. Die GB 2 292 780 A zeigt eine Rohrsteckkupplung, die einen geformten Kunststoffkörper umfasst, der zur Aufnahme eines Rohrendes geeignet ist. Aus der EP 3 112 736 A1 ist eine Vorrichtung zur Sicherung eines Rohres bekannt, die einen in seinem Umfang durch ein Spannelement zusammendrückbaren Klemmring aufweist. Ein ähnliches Verfahren zur Herstellung eines Klemmrings für Rohrverbindungen wird in der US 4 706 529 A beschrieben.

Solche Klemmringe weisen aber nur eine beschränkte Härte auf und können dadurch beispielsweise bei der Sicherung von Polyvinylchlorid- bzw. PVC-Rohren nicht eingesetzt werden. Für die Sicherung von PVC-Rohren werden gemäß dem Stand der Technik Klemmringe mit Korund eingesetzt, wobei diese Verbindungen aber nur eine begrenzte Zugfestigkeit aufweisen.

Aufgabe der Erfindung ist es, die Nachteile des Standes der Technik zu überwinden. Insbesondere ist es Aufgabe der Erfindung, einen Klemmring und ein Verfahren zur Herstellung eines Klemmrings zu schaffen, wobei der Klemmring einerseits ein gewisses Maß an Flexibilität bzw. Nachgiebigkeit und andererseits eine hohe Zugfestigkeit aufweist.

Die erfindungsgemäße Aufgabe wird durch die Merkmale des unabhängigen Patentanspruchs 1 gelöst, wobei das erfindungsgemäße Verfahren folgende Schritte umfasst: Bereitstellen eines Einlegerrings, wobei der Einlegerring einen Opferring und mindestens zwei am Außendurchmesser des Opferrings angeordnete Verstärkungselemente umfasst, Ummanteln, insbesondere Umspritzen, des Einlegerrings mit Material, wodurch ein den Einlegerring umfassender Spritzling hergestellt wird, Mechanisches Bearbeiten des Innendurchmessers des Spritzlings, insbesondere mechanisches Entfernen des Opferrings, bevorzugt durch Fräsen und/oder durch Drehen, wodurch ein Klemmring hergestellt wird, wobei die Verstärkungselemente mit dem Innendurchmesser des Klemmrings bündig abschließen, und wobei die Verstärkungselemente, insbesondere formschlüssig und/oder kraftschlüssig, durch die Ummantelung gehalten werden.

Erfindungsgemäß umfasst der Einlegerring einen Opferring und mindestens zwei Verstärkungselemente. Die Verstärkungselemente können an dem Außendurchmesser des Opferrings angeordnet sein. Ferner kann der Einlegerring den Opferring und die mindestens zwei Verstärkungselemente umfassen oder der Einlegerring aus dem Opferring und den mindestens zwei Verstärkungselementen gebildet sein.

Nach der Bereitstellung des Einlegerrings, wird der Einlegerring mit Material, insbesondere mit einem spritzbarem Material, ummantelt oder umspritzt. Gegebenenfalls wird der Einlegerring während der Umspritzung oder der Ummantelung an dem Innendurchmesser des Opferrings gehalten und/oder fixiert. Insbesondere kann der Einlegerring mit einem sogenannten Urformenverfahren ummantelt werden.

Unter Urformen bzw. Urformenverfahren soll im Rahmen der vorliegenden Offenbarung insbesondere ein Fertigungsverfahren nach DIN 8580:2003-09 verstanden werden, welche beispielsweise unter dem Begriff "Zusammenhalt schaffen" zusammengefasst werden können. Insbesondere kann bei diesen Verfahren aus einem formlosen Stoff ein fester Körper hergestellt werden, der eine geometrisch definierte Form hat. Insbesondere kann Urformen dazu genutzt werden, um die Erstform festen Körpers herzustellen und den Stoffzusammenhalt zu schaffen.

Zum Urformen können Ausgangsstoffe im flüssigen, gasförmigen, plastischen, körnigen oder pulverförmigen Zustand genutzt werden also mit unterschiedlichem rheologischen Verhalten. Beispielsweise kann man auf Grund unterschiedlicher Kombinationen einzelner Verfahrensweisen zwischen Galvanoplastik, Pulvermetallurgie und Gießereitechnik unterscheiden.

Durch die Ummantelung oder Umspritzung des Einlegerrings kann ein Spritzling hergestellt werden. Der Spritzling kann den Einlegerring und das Ummantelungsmaterial, welches für die Ummantelung und/oder Umspritzung verwendet wurde, umfassen. Gegebenenfalls ist vorgesehen, dass der Spritzling und/oder der Klemmring eine konische Form aufweist. Es kann vorgesehen sein, dass der Spritzling und/oder der Klemmring eine erste und eine zweite Öffnung aufweist, und dass die Mantelfläche des Spritzlings und/oder des Klemmrings konisch in Richtung der ersten Öffnung des Spritzlings und/oder des Klemmrings auseinanderläuft.

Der Einlegerring, insbesondere die mindestens zwei Verstärkungselemente, kann von dem Material ummantelt oder umspritzt sein. Gegebenenfalls ist vorgesehen, dass die mindestens zwei Verstärkungselemente, insbesondere vollständig, von dem Material umgeben sind und/oder der Opferring, insbesondere der Innendurchmesser des Opferrings, frei von dem Material ist. Durch die Ummantelung oder Umspritzung wird der Einlegerring, insbesondere dessen Verstärkungselemente, mit dem Material, insbesondere dauerhaft und formschlüssig, verbunden.

Nach der Ummantelung wird der Spritzling mechanisch bearbeitet. Es kann vorgesehen sein, dass der Opferring vom Spritzling, insbesondere mechanisch, entfernt wird. Gegebenenfalls ist vorgesehen, dass zur Entfernung des Opferrings ein materialabtragendes Verfahren, wie insbesondere Fräsen oder Drehen, eingesetzt wird. Durch die Entfernung des Opferrings vom Spritzling kann ein Klemmring hergestellt werden.

Ferner können die mindestens zwei Verstärkungselemente mit dem Innendurchmesser des Klemmrings bündig abschließen.

Gegebenenfalls ist vorgesehen, dass mit der Entfernung des Opferrings auch Teile des Spritzlings, insbesondere Teile des Ummantelungsmaterials, entfernt und/oder bearbeitet werden. Gegebenenfalls ist vorgesehen, dass bei der Entfernung des Opferrings auch ein Teil der Verstärkungselemente, insbesondere die dem Innendurchmesser des Klemmrings zugewandte Oberfläche der Verstärkungselemente, entfernt und/oder bearbeitet wird. Dadurch kann eine bündige Oberfläche zwischen den mindestens zwei Verstärkungselementen und dem Ummantelungsmaterial hergestellt werden.

Gegebenenfalls ist der Einlegerring, insbesondere die mindestens zwei Verstärkungselemente, aus einem Material gebildet, welches härter ist als das Ummantelungsmaterial. Dadurch kann der Klemmring einerseits, insbesondere durch die elastische Verformbarkeit des Ummantelungsmaterials, elastisch verformt werden und weist andererseits, insbesondere durch das Material des Verstärkungselements, eine hohe Zugfestigkeit auf.

Gegebenenfalls ist oder sind der Einlegerring, der Spritzling und/oder der Klemmring ringförmig ausgebildet. Der Einlegerring, der Spritzling und/oder der Klemmring können jeweils zwei Öffnungen umfassen. Gegebenenfalls sind im Bereich der ersten und/oder zweiten Öffnung am Innendurchmesser des Spritzlings und/oder des Klemmrings Fasen angeordnet. Durch die Fasen können scharfe Kanten vermieden werden und der Klemmring kann einfach auf den zu klemmenden Teil gesteckt und/oder geschoben werden. Ferner kann sich der Klemmring auf dem zu klemmenden Teil, bei fehlender mechanischer Belastung, ohne zu verkannten bewegen. Die Fasen können einen Winkel im Bereich von 10 ° und 60 °, insbesondere 20 °, aufweisen.

Es kann vorgesehen sein, dass die erfindungsgemäßen Verfahrensschritte in der obenstehenden beschrieben Reihenfolge aufeinanderfolgen.

Gegebenenfalls ist vorgesehen, dass die mechanische Bearbeitung des Innendurchmessers des Spritzlings derart erfolgt, dass ein verzahntes Profil, insbesondere eine Verzahnung, am Innendurchmesser des Klemmrings gebildet wird.

Gegebenenfalls ist vorgesehen, dass bei der mechanischen Bearbeitung und/oder bei der Entfernung des Opferrings der Innendurchmesser des Spritzlings bearbeitet wird. Durch die mechanische Bearbeitung kann einerseits der Opferring, Teile der Verstärkungselemente und/oder Teile des Spritzlings entfernt werden. Andererseits kann durch die mechanische Bearbeitung auch ein verzahntes Profil, insbesondere eine Verzahnung, am Innendurchmesser des Spritzlings gebildet werden. Die Verzahnung kann an den Verstärkungselementen, insbesondere an der, dem Innendurchmesser zugewandten Oberfläche, der Verstärkungselemente, und/oder dem Ummantelungsmaterial des Spritzlings, angeordnet sein.

Die Verzahnung kann sägezahnartig, haifischartig, rillenartig, gewindeartig, riefenartig, gewendelt, gekreuzt ausgebildet sein und/oder eine oder keine Steigung aufweisen.

Durch die Verzahnung kann die Reibung zwischen einem zu klemmenden Teil, insbesondere einem Rohr, und dem Klemmring erhöht werden. Dadurch kann die durch den Klemmring geschaffene Verbindung höheren Belastungen standhalten und ein Lösen, Abrutschen, Ausziehen oder eine Trennung der zusammen geklemmten Teile länger verhindert werden.

Gegebenenfalls ist vorgesehen, dass der Einlegerring und/oder der Klemmring geschlossen oder geschlitzt ausgebildet ist oder sind.

Durch die Schlitzung kann sich der Klemmring bei einer mechanischen Belastung besser verformen.

Gegebenenfalls ist vorgesehen, dass die Verstärkungselemente mindestens eine Haltevorrichtung, insbesondere Nuten, Hinterschnitte, Gegenschrägen oder Einstiche aufweisen, wobei die mindestens eine Haltevorrichtung zum Herstellen einer, insbesondere formschlüssigen und/oder kraftschlüssigen, Verbindung mit der Ummantelung ausgebildet ist.

Durch die mindestens eine Haltevorrichtung der Verstärkungselemente des Einlegerrings kann eine, insbesondere formschlüssige und/oder kraftschlüssige, Verbindung mit dem Ummantelungsmaterial hergestellt werden.

Insbesondere kann vorgesehen sein, dass die mindestens eine Haltevorrichtung dafür eingerichtet ist, bei einer mechanischen Belastung des Klemmrings und somit auch einer mechanischen Belastung des Verstärkungselements, das Verstärkungselement im Ummantelungsmaterial zu halten bzw. zu fixieren. Dadurch kann bei einer mechanischen Belastung ein Ausbrechen der Verstärkungselemente aus dem Ummantelungsmaterial und dadurch ein Auseinanderbrechen des Klemmrings verhindert werden.

Die mindestens eine Haltevorrichtung kann unterschiedliche Formen aufweisen. Gegebenenfalls ist vorgesehen, dass die mindestens eine Haltevorrichtung eine Nut, einen Hinterschnitt, eine Gegenschräge, einen Einstich, Schrägen und/oder Ausnehmungen aufweist. Es kann vorgesehen sein, dass der Einlegerring ringförmig ausgebildet ist und zwei Öffnungen aufweist. An den beiden Öffnungen im Bereich des Innendurchmessers des Einlegerrings können Schrägen, insbesondere Fasen, vorgesehen sein. Die Fasen können einen Winkel im Bereich von 10 ° bis 60 ° und insbesondere 20 ° aufweisen.

Gegebenenfalls ist vorgesehen, dass zur mechanischen Bearbeitung ein Drehfräser verwendet wird, wodurch der Opferring entfernt wird und nur die Verstärkungselemente eine vorgegebene Kontur erhalten.

Gegebenenfalls ist vorgesehen, dass zur mechanischen Bearbeitung ein Verfahren wie Drehen und/oder Fräsen verwendet wird.

Durch die Verwendung eines Drehfräsers kann gezielt nur der Opferring entfernt werden. Das heißt, gegebenenfalls dass das Ummantelungsmaterial und/oder das Verstärkungselement bei der Entfernung des Opferrings, insbesondere vollständig, erhalten wird.

Gegebenenfalls ist vorgesehen, dass das Ummanteln mittels eines Urformverfahrens durchgeführt wird.

Gegebenenfalls ist vorgesehen, dass die Dicke, insbesondere die Profilstärke, des Opferrings im Bereich von 0,1 mm bis 5 mm, insbesondere im Bereich von 0,5 mm bis 1,5 mm, liegt.

Gegebenenfalls ist vorgesehen, dass die Dicke der Verstärkungselemente im Bereich von 0,5 mm bis 10 mm, insbesondere im Bereich von 2,25 mm bis 3,5 mm, liegt.

Gegebenenfalls ist vorgesehen, dass die Dicke des Opferrings und/oder die Dicke der mindestens zwei Verstärkungselemente abhängig von der Dimension des Klemmrings ist oder sind. Unter Dicke der Verstärkungselemente soll im Rahmen der vorliegenden Offenbarung der Abstand zwischen dem Außendurchmesser des Opferrings und dem Außendurchmesser des Einlegerrings verstanden werden.

Gegebenenfalls ist vorgesehen, dass der Einlegerring dreieckige, quadratische, vieleckige, runde, kegelige und/oder elliptische Verstärkungselemente umfasst.

Gegebenenfalls ist vorgesehen, dass der Einlegerring zwischen zwei und einhundert, insbesondere zwischen zwei und zehn, bevorzugt acht, Verstärkungselemente umfasst.

Gegebenenfalls ist vorgesehen, dass die mindestens zwei Verstärkungselemente des Einlegerrings trapezförmig, rund, halbkreisförmig und/oder dergleichen ausgebildet sind. Es kann auch vorgesehen sein, dass die mindestens zwei Verstärkungselemente als Steg, insbesondere als am Außendurchmesser des Einlegerrings verlaufender Steg, ausgebildet sind.

Gegebenenfalls ist vorgesehen, dass die Verstärkungselemente am Außendurchmesser des Opferrings und im hergestellten Klemmring beabstandet voneinander angeordnet sind.

Insbesondere kann vorgesehen sein, dass die Verstärkungselemente gleichmäßig verteilt und/oder gleichmäßig voneinander beabstandet an dem Außendurchmesser des Opferrings angeordnet sind.

Insbesondere kann vorgesehen sein, dass zwischen zwei und einhundert, insbesondere zwischen zwei und zehn, und bevorzugt acht Verstärkungselemente gleichmäßig voneinander beabstandet an dem Außendurchmesser des Opferrings angeordnet sind. Dadurch kann bei einer mechanischen Belastung des Klemmrings die auf den Klemmring wirkende Kraft, insbesondere über die Verstärkungselemente, gleichmäßig verteilt auf den zu klemmenden Körper, insbesondere das Rohr, wirken. Durch die gleichmäßige Belastung kann ein Versagen der Verbindung bzw. ein Ausziehen und/oder eine Trennung der Verbindung länger verhindert werden.

Gegebenenfalls ist vorgesehen, dass der Einlegerring Metall, insbesondere Messing, hochtechnische Kunststoffe, welche insbesondere als Metallersatz geeignet sind, wie insbesondere Polyamid 4.6, Polyamid 12, Polyphtalamid, Polysulfon, Polyphenylsulfid, Polyethersulfon, Polyetherimid oder Polyetheretherketon, oder Materialien, welche eine höhere Härte als PVC-Rohre aufweisen, umfasst und/oder dass die mindestens zwei Verstärkungselemente Metall, insbesondere Messing, hochtechnische Kunststoffe, welche insbesondere als Metallersatz geeignet sind, wie insbesondere Polyamid 4.6, Polyamid 12, Polyphtalamid, Polysulfon, Polyphenylsulfid, Polyethersulfon, Polyetherimid oder Polyetheretherketon, oder Materialien, welche eine höhere Härte als PVC-Rohre aufweisen, umfassen.

Gegebenenfalls ist vorgesehen, dass der Einlegerring aus Metall, insbesondere Messing, einem hochtechnischen Kunststoff, welcher insbesondere als Metallersatz geeignet ist, wie insbesondere Polyamid 4.6, Polyamid 12, Polyphtalamid, Polysulfon, Polyphenylsulfid, Polyethersulfon, Polyetherimid oder Polyetheretherketon, oder aus einem Materialien, welches eine höhere Härte als PVC-Rohre aufweist, gebildet ist und/oder dass die mindestens zwei Verstärkungselemente aus Metall, insbesondere Messing, einem hochtechnischen Kunststoff, welcher insbesondere als Metallersatz geeignet ist, wie insbesondere Polyamid 4.6, Polyamid 12, Polyphtalamid, Polysulfon, Polyphenylsulfid, Polyethersulfon, Polyetherimid oder Polyetheretherketon, oder aus einem Materialien, welches eine höhere Härte als PVC-Rohre aufweist, gebildet sind.

Gegebenenfalls ist vorgesehen, dass der Einlegerring mit spritzbarem Material, insbesondere einem Kunststoff oder einem Elastomer, umspritzt wird.

Durch die Kombination der Materialien kann ein Klemmring hergestellt werden, welcher einerseits bis zu einem gewissen Grad, insbesondere reversibel, verformbar ist und welcher andererseits durch die Verstärkungselemente eine hohe Härte bzw. eine hohe mechanische Widerstandsfähigkeit aufweist.

Die Erfindung betrifft des Weiteren einen Klemmring, welcher nach vorab beschriebenen Verfahren hergestellt wurde.

Unter Außendurchmesser soll im Rahmen der vorliegenden Offenbarung der Außenring und/oder Außendurchmesser eines ringförmigen Körpers verstanden werden. Beispielsweise kann der Außendurchmesser des Einlegerrings durch die am Opferring angeordneten Verstärkungselemente gebildet sein.

Unter Innendurchmesser soll im Rahmen der vorliegenden Offenbarung der Innenring und/oder der Innendurchmesser eines ringförmigen Körpers verstanden werden.

Unter Ummantelungsmaterial soll im Rahmen der vorliegenden Offenbarung das ausgehärtete spritzbare Material, welches zur Ummantelung und/oder Umspritzung des Einlegerrings verwendet wurde, verstanden werden.

Weitere erfindungsgemäße Merkmale ergeben sich aus den Ansprüchen, der Beschreibung, der Ausführungsbeispiele und den Figuren.

Die Erfindung wird nun am Beispiel exemplarischer, nicht ausschließlicher, Ausführungsbeispiele erläutert.
Fig. 1 zeigt eine schematische Darstellung einer ersten Ausführungsform eines erfindungsgemäßen Spritzlings vor der mechanischen Bearbeitung,
Fig. 2 zeigt eine schematische Darstellung einer ersten Ausführungsform des erfindungsgemäßen Spritzlings der Figur 1 nach der mechanischen Bearbeitung, also eine erste Ausführungsform eines erfindungsgemäßen Klemmrings,
Fig. 3a, 3b und 3c zeigen eine erste Ausführungsform eines erfindungsgemäßen Einlegerrings,
Fig. 4a, 4b und 4c zeigen eine zweite Ausführungsform eines erfindungsgemäßen Einlegerrings.

Wenn nicht anders angegeben, so entsprechen die Bezugszeichen folgenden Komponenten: Klemmring 1, Einlegerring 2, Opferring 3, Verstärkungselement 4, Nuten 5, Spritzling 6, Ummantelungsmaterial 7, Haltevorrichtungen 8, Schräge 9, Einstich 10, erste Öffnung 11, zweite Öffnung 12 und Fase 13.

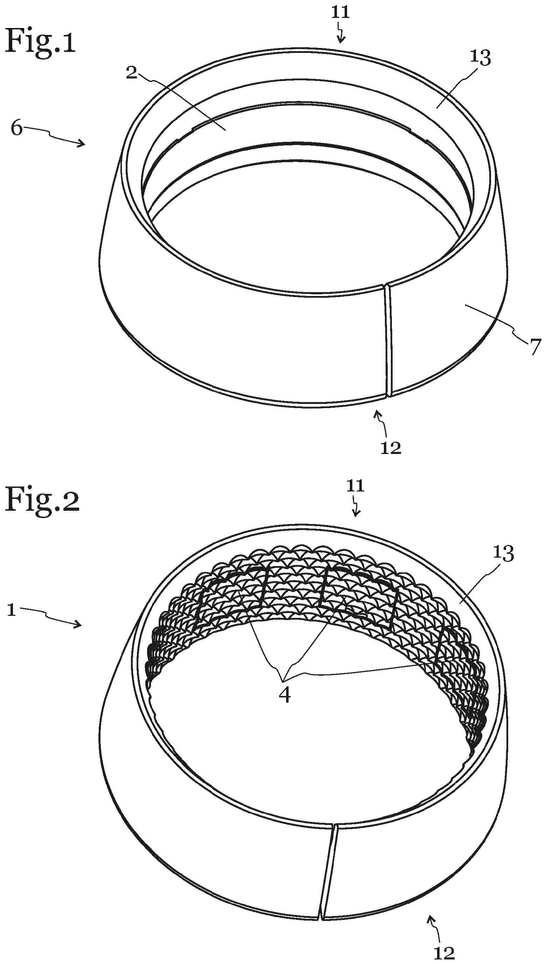

Figur 1 zeigt eine schematische Darstellung einer ersten Ausführungsform eines erfindungsgemäßen Spritzlings 6 vor der mechanischen Bearbeitung. Der Spritzling 6 umfasst den Einlegerring 2 und das Ummantelungsmaterial 7. Gemäß dieser Ausführungsform sind die Verstärkungselemente 4 und Teile des Opferrings 3 vom Ummantelungsmaterial 7 ummantelt. Zur Herstellung des Spritzlings 6 wurde der Einlegerring 2, welcher die Verstärkungselemente 4 umfasst, mit einem spritzbaren Material umspritzt und/oder ummantelt. Gemäß dieser Ausführungsform wurde zur Umspritzung des Einlegerrings 2 ein Urformenverfahren verwendet.

Gemäß dieser Ausführungsform ist der gesamte Einlegerring 2 aus Metall gebildet. Somit sind gemäß der ersten Ausführungsform auch der Opferring 3 und die Verstärkungselemente 4 aus Metall. In einer nicht dargestellten Ausführungsform können der Opferring und die Verstärkungselemente aus einem unterschiedlichen Material gebildet sein. Das zur Ummantelung des Einlegerrings 2 verwendete Material ist in dieser Ausführungsform Kunststoff.

Im Bereich der ersten Öffnung 11 und zweiten Öffnung 12 sind Fasen 13 vorgesehen. Gemäß dieser Ausführungsform haben die Fasen 13 einen Winkel von etwa 20 °.

Gemäß dieser Ausführungsform ist der Spritzling 6 und der Einlegerring 2 geschlitzt ausgeführt. Durch die geschlitzte Ausführung kann der Spritzling 6 bei einer mechanischen Belastung weiter verformt werden, als bei einer nicht geschlitzten Ausführung.

In einer nicht dargestellten Ausführungsform ist der Spritzling 6 und der Einlegerring 2 nicht geschlitzt ausgeführt. Der Spritzling 6 weist in dieser Ausführungsform eine konische Form auf.

Die Verstärkungselemente 4 umfassen in dieser Ausführungsform Haltevorrichtungen 8, über welche die Verstärkungselemente 4 in dem Ummantelungsmaterial 7 gehalten werden. Das heißt, dass bei einer mechanischen Belastung ein Ausbrechen der Verstärkungselemente 4 aus dem Ummantelungsmaterial 7 verhindert wird.

Figur 2 zeigt eine schematische Darstellung einer ersten Ausführungsform eines erfindungsgemäßen Klemmrings 1. Der Klemmring 1 gemäß dieser Ausführungsform wurde aus dem Spritzling 6 der Figur 1 durch mechanische Bearbeitung hergestellt. Durch die mechanische Bearbeitung des Spritzlings 6 wurden der Opferring 3, Teile der Verstärkungselemente 4 und Teile des Ummantelungsmaterials 7 entfernt. Durch die Entfernung dieser Teile konnte ein verzahntes Profil bzw. eine Verzahnung am Innendurchmesser des Klemmrings 1 gebildet werden. Insbesondere wurde das verzahnte Profil sowohl an der, zum Innendurchmesser des Klemmrings 1 weisenden Oberfläche der Verstärkungselemente 4, als auch an Teilen des Ummantelungsmaterials 7 gebildet. Gemäß dieser Ausführungsform wurde der Klemmring 1 mittels Drehen aus dem Spritzling 6 der Figur 1 hergestellt.

Gemäß dieser Ausführungsform sind durch die Bearbeitung die am Spritzling 6 vorhandenen Fasen 13 erhalten worden. Das heißt, dass die Fasen 13 zumindest teilweise am Klemmring 1 vorhanden sind. Dadurch kann der Klemmring 1 einfach und ohne zu verkanten auf den zu klemmenden Teil geschoben werden. Ferner kann sich der Klemmring1 bei fehlender mechanischer Belastung ohne zu verkanten auf dem zu klemmenden Teil bewegen.

Durch die Verzahnung des Klemmrings 1, insbesondere der Verstärkungselemente 4, kann die Reibung zwischen einem zu klemmenden Teil, insbesondere einem Rohr, und dem Klemmring 1 erhöht werden. Dadurch kann die durch den Klemmring 1 geschaffene Verbindung höheren Belastungen standhalten und eine Lösung bzw. eine Trennung der zu klemmenden Teile wird länger verhindert.

Der Klemmring 1 ist in dieser Ausführungsform geschlitzt ausgebildet. In einer nicht dargestellten Ausführungsform ist der Klemmring nicht geschlitzt bzw. geschlossen ausgebildet.

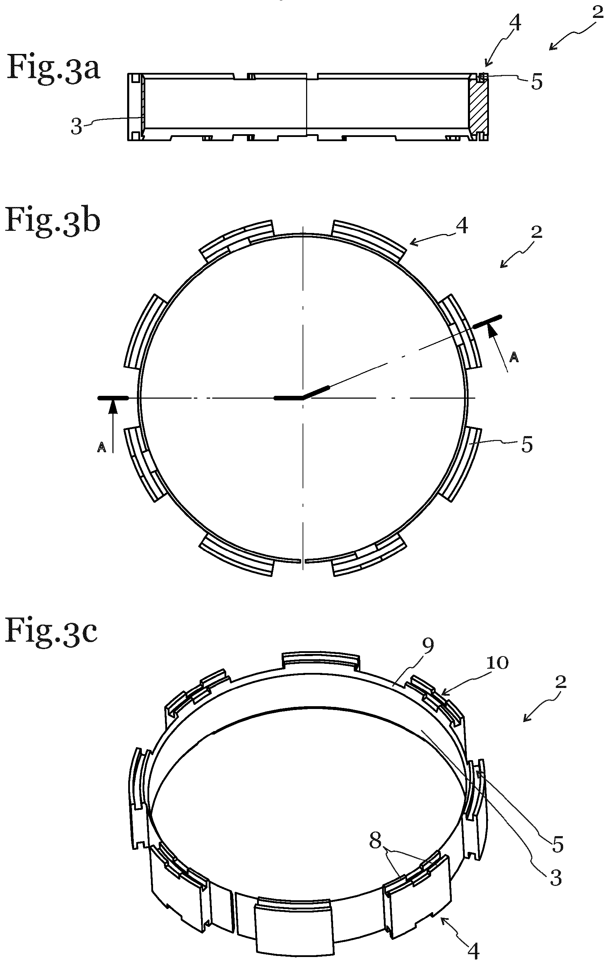

Figur 3a, 3b und 3c zeigen eine erste Ausführungsform eines erfindungsgemäßen Einlegerrings 2. Der Einlegerring 2 umfasst einen Opferring 3 und acht Verstärkungselemente 4. Die Verstärkungselemente 4 sind gleichmäßig beabstandet am Außendurchmesser des Opferrings 3 angeordnet. Gemäß dieser Ausführungsform sind die Verstärkungselemente 4 im Wesentlichen quadratisch ausgebildet und umfassen Haltevorrichtungen 8, insbesondere Nuten 5, Schrägen 9 und Einstiche 10.

Durch die Haltevorrichtungen 8 kann eine, insbesondere formschlüssige und/oder kraftschlüssige, Verbindung der Verstärkungselemente 4 mit dem Ummantelungsmaterial 7 hergestellt werden. Gemäß dieser Ausführungsform sind die Haltevorrichtungen 8 dazu eingerichtet, bei einer mechanischen Belastung des Klemmrings 1 und somit auch einer mechanischen Belastung der Verstärkungselemente 4 das Verstärkungselement 4 im Ummantelungsmaterial 7 zu halten bzw. zu fixieren. Durch die Ausgestaltung der Haltevorrichtungen 8 soll ein Auseinanderbrechen des Klemmrings, also eine Trennung der Verstärkungselemente 4 vom Ummantelungsmaterial 7, verhindert werden.

Gemäß dieser Ausführungsform beträgt die Dicke des Opferrings 3 etwa 1,0 mm und die Dicke der Verstärkungselemente 4 etwa 3,0 mm.

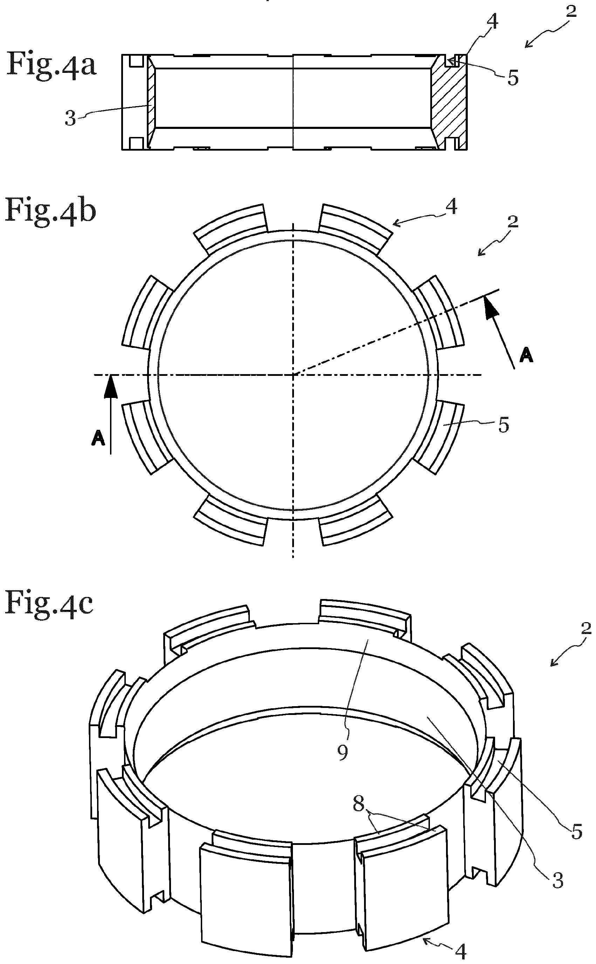

Figur 4a, 4b und 4c zeigen eine zweite Ausführungsform des erfindungsgemäßen Klemmring 2. Gemäß dieser Ausführungsform ist der Einlegerring 2 nicht geschlitzt ausgeführt.

Der Einlegerring 2 umfasst gemäß dieser Ausführungsform einen Opferring 3 und acht Verstärkungselemente 4, welche gleichmäßig beabstandet am Außendurchmesser des Opferrings 3 vorgesehen sind.

Die Merkmale der Ausführungsform gemäß Fig. 4a, 4b und 4c können bevorzugt den Merkmalen der Ausführungsform gemäß Fig. 3a, 3b und 3c entsprechen.

Die Erfindung beschränkt sich nicht auf die dargestellten Ausführungsformen, sondern umfasst jegliches Verfahren gemäß den nachfolgenden Patentansprüchen und die mit diesen Verfahren hergestellten oder herstellbaren Klemmringe.

## Patentansprüche

1. Verfahren zur Herstellung eines Klemmrings (1), umfassend folgende Schritte:
- Bereitstellen eines Einlegerrings (2), wobei der Einlegerring einen Opferring (3) und mindestens zwei am Außendurchmesser des Opferrings (3) angeordnete Verstärkungselemente (4) umfasst,
- Ummanteln, insbesondere Umspritzen, des Einlegerrings (2) mit Material, wodurch ein den Einlegerring (2) umfassender Spritzling (6) hergestellt wird,
- Mechanisches Bearbeiten des Innendurchmessers des Spritzlings, insbesondere mechanisches Entfernen des Opferrings (3), bevorzugt durch Fräsen und/oder durch Drehen, wodurch ein Klemmring (1) hergestellt wird, wobei die Verstärkungselemente (4) mit dem Innendurchmesser des Klemmrings (1) bündig abschließen, und wobei die Verstärkungselemente (4), insbesondere formschlüssig und/oder kraftschlüssig, durch die Ummantelung gehalten werden.

2. Verfahren nach Anspruch 1, **dadurch gekennzeichnet, dass** die mechanische Bearbeitung des Innendurchmessers des Spritzlings (6) derart erfolgt, dass ein verzahntes Profil, insbesondere eine Verzahnung, am Innendurchmesser des Klemmrings (1) gebildet wird.

3. Verfahren nach Anspruch 1 oder 2, **dadurch gekennzeichnet, dass** der Einlegerring (2) und/oder der Klemmring (1) geschlossen oder geschlitzt ausgebildet ist oder sind.

4. Verfahren nach einem der vorangehenden Ansprüche, **dadurch gekennzeichnet, dass** die Verstärkungselemente (4) mindestens eine Haltevorrichtung, insbesondere Nuten (5), Hinterschnitte, Gegenschrägen (9) oder Einstiche (10) aufweisen, wobei die mindestens eine Haltevorrichtung zum Herstellen einer, insbesondere formschlüssigen und/oder kraftschlüssigen, Verbindung mit der Ummantelung ausgebildet ist.

5. Verfahren nach einem der vorangehenden Ansprüche, **dadurch gekennzeichnet, dass** zur mechanischen Bearbeitung ein Verfahren wie Drehen und/oder Fräsen verwendet wird, wodurch der Opferring (3) entfernt wird und nur die Verstärkungselemente (4) eine vorgegebene Kontur erhalten.

6. Verfahren nach einem der vorangehenden Ansprüche, **dadurch gekennzeichnet, dass** das Ummanteln mittels eines Urformenverfahrens durchgeführt wird.

7. Verfahren nach einem der vorangehenden Ansprüche, **dadurch gekennzeichnet, dass** die Dicke, insbesondere die Profilstärke, des Opferrings (3) im Bereich von 0,1 mm bis 5 mm, insbesondere im Bereich von 0,5 mm bis 1,5 mm, liegt.

8. Verfahren nach einem der vorangehenden Ansprüche, **dadurch gekennzeichnet, dass** die Dicke der Verstärkungselemente (4) im Bereich von 0,5 mm bis 10 mm, insbesondere im Bereich von 2,25 mm bis 3,5 mm, liegt.

9. Verfahren nach einem der vorangehenden Ansprüche, **dadurch gekennzeichnet, dass** der Einlegerring (2) dreieckige, quadratische, vieleckige, runde, kegelige und/oder elliptische Verstärkungselemente (4) umfasst.

10. Verfahren nach einem der vorangehenden Ansprüche, **dadurch gekennzeichnet, dass** der Einlegerring (2) zwischen zwei und einhundert, insbesondere zwischen zwei und zehn, bevorzugt acht, Verstärkungselemente (4) umfasst.

11. Verfahren nach einem der vorangehenden Ansprüche, **dadurch gekennzeichnet, dass** die Verstärkungselemente (4) am Außendurchmesser des Opferrings (3) und im hergestellten Klemmring (1) beabstandet voneinander angeordnet sind.

12. Verfahren nach einem der vorangehenden Ansprüche, **dadurch gekennzeichnet,**
- **dass** der Einlegerring (2) Metall, insbesondere Messing, hochtechnische Kunststoffe, welche insbesondere als Metallersatz geeignet sind, wie insbesondere Polyamid 4.6, Polyamid 12, Polyphtalamid, Polysulfon, Polyphenylsulfid, Polyethersulfon, Polyetherimid oder Polyetheretherketon, oder Materialien, welche eine höhere Härte als PVC-Rohre aufweisen, umfasst,
- oder dass der Einlegerring (2) aus Metall, insbesondere Messing, einem hochtechnischen Kunststoff, welcher insbesondere als Metallersatz geeignet ist, wie insbesondere Polyamid 4.6, Polyamid 12, Polyphtalamid, Polysulfon, Polyphenylsulfid, Polyethersulfon, Polyetherimid oder Polyetheretherketon, oder aus einem Materialien, welches eine höhere Härte als PVC-Rohre aufweist, gebildet ist.

13. Verfahren nach einem der vorangehenden Ansprüche, **dadurch gekennzeichnet,**
- **dass** die mindestens zwei Verstärkungselemente (4) Metall, insbesondere Messing, hochtechnische Kunststoffe, welche insbesondere als Metallersatz geeignet sind, wie insbesondere Polyamid 4.6, Polyamid 12, Polyphtalamid, Polysulfon, Polyphenylsulfid, Polyethersulfon, Polyetherimid oder Polyetheretherketon, oder Materialien, welche eine höhere Härte als PVC-Rohre aufweisen, umfassen,
- oder dass die mindestens zwei Verstärkungselemente (4) aus Metall, insbesondere Messing, einem hochtechnischen Kunststoff, welcher insbesondere als Metallersatz geeignet ist, wie insbesondere Polyamid 4.6, Polyamid 12, Polyphtalamid, Polysulfon, Polyphenylsulfid, Polyethersulfon, Polyetherimid oder Polyetheretherketon, oder aus einem Materialien, welches eine höhere Härte als PVC-Rohre aufweist, gebildet sind.

14. Verfahren nach einem der vorangehenden Ansprüche, **dadurch gekennzeichnet, dass** der Einlegerring (2) mit spritzbarem Material, insbesondere einem Kunststoff oder einem Elastomer, umspritzt wird.

15. Klemmring (1), hergestellt gemäß dem Verfahren der vorangegangen Patentansprüche.

## Claims

1. A method for manufacturing a clamping ring (1), comprising the following steps:
- providing an insert ring (2), the insert ring comprising a sacrificial ring (3) and at least two reinforcing elements (4) arranged on the outer circumference of the sacrificial ring (3),
- sheathing, in particular overmoulding, the insert ring (2) with material, whereby an injection-moulded part (6) comprising the insert ring (2) is produced,
- mechanically processing the inner circumference of the injection-moulded part, in particular mechanically removing the sacrificial ring (3), preferably by milling and/or by turning, whereby a clamping ring (1) is manufactured, wherein the reinforcing elements (4) terminate flush to the inner circumference of the clamping ring (1), and wherein the reinforcing elements (4) are held, in particular form-fittingly and/or force-fittingly, by the sheath.

2. The method according to claim 1, **characterised in that** the mechanical processing of the inner circumference of the injection-moulded part (6) is carried out in such a way that a toothed profile, in particular a toothing, is formed on the inner circumference of the clamping ring (1).

3. The method according to claim 1 or 2, **characterised in that** the insert ring (2) and/or the clamping ring (1) is or are of closed or slotted design.

4. The method according to one of the preceding claims, **characterised in that** the reinforcing elements (4) have at least one retaining device, in particular grooves (5), undercuts, counter-bevels (9) or recesses (10), wherein the at least one retaining device is designed to produce a connection, in particular form-fitting and/or force-fitting, with the sheath.

5. The method according to one of the preceding claims, **characterised in that** a method such as turning and/or milling is used for mechanical processing, whereby the sacrificial ring (3) is removed and only the reinforcing elements (4) are given a predetermined contour.

6. The method according to one of the preceding claims, **characterised in that** the sheath is carried out by means of a primary forming process.

7. The method according to one of the preceding claims, **characterised in that** the thickness, in particular the profile thickness, of the sacrificial ring (3) is in the range of 0.1 mm to 5 mm, in particular in the range of 0.5 mm to 1.5 mm.

8. The method according to one of the preceding claims, **characterised in that** the thickness of the reinforcing elements (4) is in the range of 0.5 mm to 10 mm, in particular in the range of 2.25 mm to 3.5 mm.

9. The method according to one of the preceding claims, **characterised in that** the insert ring (2) comprises triangular, square, polygonal, round, conical and/or elliptical reinforcing elements (4).

10. The method according to one of the preceding claims, **characterised in that** the insert ring (2) comprises between two and one hundred, in particular between two and ten, preferably eight, reinforcing elements (4).

11. The method according to one of the preceding claims, **characterised in that** the reinforcing elements (4) are arranged at a distance from each other on the outer circumference of the sacrificial ring (3) and in the manufactured clamping ring (1).

12. The method according to one of the preceding claims, **characterised**
- **in that** the insert ring (2) comprises metal, in particular brass, high-tech plastics which are suitable in particular as metal substitutes, such as in particular polyamide 4.6, polyamide 12, polyphtalamide, polysulfone, polyphenylsulfide, polyethersulfone, polyetherimide or polyetheretherketone, or materials which exhibit a higher hardness than PVC pipes,
- or in that the insert ring (2) is formed from metal, in particular brass, a high-tech plastic which is suitable in particular as a metal substitute, such as in particular polyamide 4.6, polyamide 12, polyphtalamide, polysulfone, polyphenylsulfide, polyethersulfone, polyetherimide or polyetheretherketone, or from a material which has a higher hardness than PVC pipes.

13. The method according to one of the preceding claims, **characterised**
- **in that** the at least two reinforcement elements (4) comprise metal, in particular brass, high-tech plastics which are suitable in particular as metal substitutes, such as in particular polyamide 4.6, polyamide 12, polyphtalamide, polysulfone, polyphenylsulfide, polyethersulfone, polyetherimide or polyetheretherketone, or materials which have a higher hardness than PVC pipes,
- or in that the at least two reinforcement elements (4) are formed from metal, in particular brass, a high-tech plastic which is suitable in particular as a metal substitute, such as in particular polyamide 4.6, polyamide 12, polyphtalamide, polysulfone, polyphenylsulfide, polyethersulfone, polyetherimide or polyetheretherketone, or from a material which has a higher hardness than PVC pipes.

14. The method according to one of the preceding claims, **characterised in that** the insert ring (2) is overmoulded with injection-mouldable material, in particular a plastic or an elastomer.

15. A clamping ring (1) manufactured according to the method of the preceding claims.

## Revendications

1. Procédé de fabrication d'une bague de serrage (1), comprenant les étapes suivantes :
- fournir une bague d'insertion (2), la bague d'insertion comprenant une bague sacrificielle (3) et au moins deux éléments de renforcement (4) disposés sur le diamètre extérieur de la bague sacrificielle (3),
- enrober, en particulier par injection, la bague d'insertion (2) avec un matériau, fabriquant ainsi une pièce injectée (6) comprenant la bague d'insertion (2),
- usiner mécaniquement le diamètre intérieur de la pièce injectée, en particulier enlever mécaniquement la bague sacrificielle (3), de préférence par fraisage et/ou par tournage, fabriquant ainsi une bague de serrage (1), les éléments de renforcement (4) affleurant le diamètre intérieur de la bague de serrage (1) et les éléments de renforcement (4) étant maintenus, en particulier par complémentarité de formes et/ou par adhérence, par l'enrobage.

2. Procédé selon la revendication 1, **caractérisé en ce que** l'usinage mécanique du diamètre intérieur de la pièce injectée (6) est effectué de telle sorte qu'un profil denté, en particulier une denture, est formé sur le diamètre intérieur de la bague de serrage (1).

3. Procédé selon la revendication 1 ou 2, **caractérisé en ce que** la bague d'insertion (2) et/ou la bague de serrage (1) est ou sont conçue(s) de manière fermée ou fendue.

4. Procédé selon l'une des revendications précédentes, **caractérisé en ce que** lesdits éléments de renforcement (4) présentent au moins un dispositif de retenue, en particulier des rainures (5), des contre-dépouilles, des contre-biseaux (9) ou des piqûres (10), ledit au moins un dispositif de retenue étant conçu pour réaliser une liaison, en particulier par complémentarité de forme et/ou par adhérence, avec l'enrobage.

5. Procédé selon l'une quelconque des revendications précédentes, **caractérisé en ce que**, pour l'usinage mécanique, un procédé tel que le tournage et/ou le fraisage est utilisé, ce qui permet d'éliminer la bague sacrificielle (3) et de donner un contour prédéterminé uniquement aux éléments de renforcement (4).

6. Procédé selon l'une quelconque des revendications précédentes, **caractérisé en ce que** ledit enrobage est réalisé au moyen d'un procédé de formage primaire.

7. Procédé selon l'une quelconque des revendications précédentes, **caractérisé en ce que** l'épaisseur, notamment l'épaisseur du profil, de la bague sacrificielle (3) est dans la plage de 0,1 mm à 5 mm, en particulier dans la plage de 0,5 mm à 1,5 mm.

8. Procédé selon l'une quelconque des revendications précédentes, **caractérisé en ce que** l'épaisseur des éléments de renforcement (4) est dans la plage de 0,5 mm à 10 mm, en particulier dans la plage de 2,25 mm à 3,5 mm.

9. Procédé selon l'une quelconque des revendications précédentes, **caractérisé en ce que** la bague d'insertion (2) comprend des éléments de renforcement (4) triangulaires, carrés, polygonaux, ronds, coniques et/ou elliptiques.

10. Procédé selon l'une quelconque des revendications précédentes, **caractérisé en ce que** la bague d'insertion (2) comprend entre deux et cent, en particulier entre deux et dix, de préférence huit, éléments de renforcement (4).

11. Procédé selon l'une quelconque des revendications précédentes, **caractérisé en ce que** les éléments de renforcement (4) sont disposés de manière espacée sur le diamètre extérieur de la bague sacrificielle (3) et dans la bague de serrage (1) fabriquée.

12. Procédé selon l'une quelconque des revendications précédentes, **caractérisé**
- **en ce que** la bague d'insertion (2) comprend du métal, en particulier du laiton, des matières plastiques de haute technicité qui conviennent en particulier pour remplacer le métal, comme notamment le polyamide 4.6, le polyamide 12, le polyphtalamide, la polysulfone, le polyphénylsulfure, la polyéthersulfone, le polyétherimide ou la polyétheréthercétone, ou des matériaux qui présentent une dureté supérieure à celle des tuyaux en PVC,
- ou en ce que la bague d'insertion (2) est formée de métal, en particulier de laiton, d'une matière plastique de haute technicité qui convient en particulier pour remplacer le métal, comme notamment le polyamide 4.6, le polyamide 12, le polyphtalamide, le polysulfone, le polyphénylsulfure, le polyéthersulfone, le polyétherimide ou le polyétheréthercétone, ou d'un matériau qui présente une dureté supérieure à celle des tuyaux en PVC.

13. Procédé selon l'une quelconque des revendications précédentes, **caractérisé**
- **en ce que** les au moins deux éléments de renforcement (4) comprennent du métal, en particulier du laiton, des matières plastiques de haute technicité qui conviennent en particulier pour remplacer le métal, comme notamment le polyamide 4.6, le polyamide 12, le polyphtalamide, la polysulfone, le polyphénylsulfure, la polyéthersulfone, le polyétherimide ou la polyétheréthercétone, ou des matériaux qui présentent une dureté supérieure à celle des tuyaux en PVC,
- ou en ce que les au moins deux éléments de renforcement (4) sont formés de métal, en particulier de laiton, d'une matière plastique de haute technicité qui convient en particulier pour remplacer le métal, comme notamment le polyamide 4.6, le polyamide 12, le polyphtalamide, la polysulfone, le polyphénylsulfure, la polyéthersulfone, le polyétherimide ou la polyétheréthercétone, ou d'un matériau qui présente une dureté supérieure à celle des tuyaux en PVC.

14. Procédé selon l'une quelconque des revendications précédentes, **caractérisé en ce que** la bague d'insertion (2) est enrobée par injection d'un matériau injectable, notamment d'une matière plastique ou d'un élastomère.

15. Bague de serrage (1) fabriquée selon le procédé des revendications précédentes.
